# EUROPÄISCHE PATENTSCHRIFT

(11) **EP 2 695 704 B1**
(45) Veröffentlichungstag und Bekanntmachung des Hinweises auf die Patenterteilung: **25.02.2015**
(21) Anmeldenummer: 12179785.6
(22) Anmeldetag: 09.08.2012
(51) Int. Cl.: B23P 15/00, F01D 5/04, F01D 5/14, C22F 1/18

(54) **Verfahren zur Herstellung eines TIAL-Schaufelkranzsegments für eine Gasturbine sowie ein entsprechendes Schaufelkranzsegment**
Method for manufacturing a TIAL blade ring segment for a gas turbine and corresponding blade ring segment
Procédé de fabrication d'un segment de couronne d'aubes en TiAl pour une turbine à gaz ainsi que segment de couronne d'aubes correspondant

(43) Veröffentlichungstag der Anmeldung: 12.02.2014
(73) Patentinhaber: MTU Aero Engines GmbH, 80995 München (DE)
(72) Erfinder: Richter, Karl-Hermann, 85229 Markt Indersdorf (DE)

(56) Entgegenhaltungen:
- EP-A1- 0 836 899
- DE-A1- 19 858 702
- DE-A1-102007 051 499
- DE-A1-102008 057 190
- DE-A1-102009 013 819
- DE-A1-102009 052 305
- JP-A- 2001 279 303
- US-A- 5 269 058
- US-A1- 2003 223 873
- US-A1- 2006 099 455
- US-A1- 2010 150 725

## Beschreibung

### GEBIET DER ERFINDUNG

Die vorliegende Erfindung betrifft ein Verfahren zur Herstellung eines Schaufelkranzes für eine Gasturbine, insbesondere für ein Flugtriebwerk sowie einen entsprechendes Schaufelkranzsegment.

### STAND DER TECHNIK

Aus der US 2010/150725 A1 ist ein Verfahren nach dem Oberbegriff von Anspruch 1 bekannt.

Ferner ist aus der DE 10 2009 013 819 A1 ein Verfahren zur Herstellung eines Leitschaufelkranzes bekannt, bei dem Schaufelrohlinge beispielsweise schmiedetechnisch hergestellt werden, um anschließend zu einem Leitschaufelsegment zusammengeschweißt zu werden. Damit soll ein kostengünstiges Verfahren zur Herstellung eines Leitschaufelkranzes geschaffen werden und es sollen Versetzungen benachbarter Schaufeln gegeneinander vermieden werden, um eine strömungsmechanische Optimierung zu erzielen.

Die DE 10 2009 013 819 A1 beschreibt jedoch nicht, dass mit dem vorgestellten Verfahren auch Laufschaufeln bzw. Laufschaufelkranzsegmente hergestellt werden könnten, die durch die Rotationsbewegung starken Fliehkräften ausgesetzt sind.

Gerade hier ergibt sich jedoch bei schnell drehenden Komponenten einer Gasturbine und insbesondere eines Flugtriebwerks die Notwendigkeit, eine geeignete Materialauswahl mit einem erforderlichen Design der Komponenten und einem effizienten und geeigneten Herstellungsverfahren zu kombinieren. So ist es beispielsweise für schnell drehende Niederdruckturbinenschaufeln vorteilhaft, diese aus einem TiAl-Werkstoff zu fertigen, da die TiAl-Werkstoffe ein niedriges spezifisches Gewicht und gleichzeitig die erforderlichen mechanischen Festigkeitswerte sowie eine ausreichende Beständigkeit gegenüber der in der Arbeitsumgebung herrschenden Atmosphäre aufweisen. Allerdings müssen die TiAl-Schaufeln, die hier eingesetzt werden, schmiedetechnisch hergestellt werden, um durch die geeigneten Schmiedeprozesse ein Werkstoffgefüge einzustellen, das den Festigkeitsanforderungen genügt. Gleichzeitig ist es jedoch vorteilhaft, Schaufelkranzsegmente, beispielsweise sogenannte Schaufelzwillinge, also Schaufelkranzsegmente mit zwei Schaufelblättern, einzusetzen, die einen gemeinsamen Schaufelfuß aufweisen. Dadurch ist eine strukturmechanische Optimierung möglich, die eine effiziente Anbindung der Schaufeln an eine drehende Scheibe einer Gasturbine ermöglicht und einen optimalen Lastabtrag gewährleistet.

Allerdings sind die für die Eigenschaften einer TiAl-Schaufel erforderlichen Schmiedeprozesse für große Bauteile, wie Schaufelkranzsegmente, schwierig durchzuführen, wenn eine bestimmte Gefügeeinstellung erforderlich ist. Entsprechend ist es schwierig, eine schmiedetechnische Herstellung von TiAl - Schaufeln mit einer Kombination der Schaufeln zu Schaufelkranzsegmenten zu vereinbaren.

### OFFENBARUNG DER ERFINDUNG

### AUFGABE DER ERFINDUNG

Es ist deshalb Aufgabe der vorliegenden Erfindung, ein TiAl - Schaufelkranzsegment, insbesondere für Laufschaufeln einer Gasturbine und insbesondere eins Flugtriebwerks, bereitzustellen, bei dem sowohl die vorteilhaften Eigenschaften des TiAl - Werkstoffs mit niedrigem Gewicht, als auch die erforderliche Einstellung der Festigkeitswerte durch geeignete Schmiedeprozesse mit einer kostengünstigen Herstellung kombiniert werden können. Ein entsprechendes Verfahren soll somit insgesamt einfach durchführbar sein und zuverlässige und reproduzierbare Ergebnisse in Form von hochbelastbaren Schaufelkranzsegmenten, insbesondere Laufschaufelkranzsegmenten, mit einem niedrigen Gewicht bereit stellen.

### TECHNISCHE LÖSUNG

Diese Aufgabe wird gelöst durch ein Verfahren mit den Merkmalen des Anspruchs 1 sowie ein Schaufelkranzsegment mit den Merkmalen des Anspruchs 8. Vorteilhafte Ausgestaltungen sind Gegenstand der abhängigen Ansprüche.

Gemäß der Erfindung wird das aus der DE 10 2009 013 819 A1 für Leitschaufelkranzsegmente bekannte Verfahren auf Schaufelkranzsegmente allgemein und insbesondere Laufschaufelkranzsegmente übertragen, wobei sich überraschend herausgestellt hat, dass das Verfahren für den schwierig zu verarbeitenden Werkstoff TiAl bzw. darauf basierende Werkstoffe einsetzbar ist, ohne dass das erforderliche Gefüge, das durch Schmiedeprozesse hergestellt worden ist, in einer Weise beeinflusst wird, dass es für den Einsatz in hochbelasteten Turbinenteilen nicht mehr geeignet wäre.

Insbesondere hat sich herausgestellt, dass mit dem erfindungsgemäßen Verfahren ein Schaufelkranzsegment für eine Gasturbine, insbesondere für ein Flugtriebwerk, und insbesondere ein Laufschaufelkranzsegment aus einem TiAl-Werkstoff hergestellt werden kann, bei welchem mindestens zwei benachbarte Schaufelblätter einen einzigen gemeinsamen Schaufelfuß aufweisen.

Das Verfahren umfasst die Verfahrensschritte:
- Schmieden von mindestens zwei Rohlingen aus einem TiAl-Werkstoff,
- Fügen der Rohlinge zu einem Schaufelkranz mittels eines Verfahrens zum stoffschlüssigen Verbinden und
- Nachbearbeitung des erhaltenen Rohlingverbundes durch materialabtragende Verfahren.

Im ersten Schritt des Verfahrens wird durch geeignetes Umformen bzw. Schmieden das für die mechanischen Eigenschaften des TiAl - Werkstoffs erforderliche Gefüge eingestellt, und zwar zumindest in einer Grundstruktur, die dann durch nachfolgende Wärmebehandlung optimiert werden kann. Gleichzeitig kann durch das Umformen bzw. Schmieden den Rohlingen eine Form gegeben werden, die über einen großen Bereich von nicht an die Endform angepassten Grundformen bis zu endkonturnahen Rohlingen reichen kann.

Die Nachbearbeitung der gefügten Rohlinge bzw. des Schaufelkranzsegments zur Ausbildung der Endkontur des Schaufelkranzsegments kann durch elektrochemisches Abtragen oder durch Fräsen oder durch sonstige geeignete Verfahren zur materialabtragenden Formgebung erfolgen.

Die Nachbearbeitung des Schaufelkranzsegments kann beschränkt auf strömungsmechanisch relevante Bereiche des Schaufelkranzsegments erfolgen oder in diesen besonders intensiv oder genau durchgeführt werden. Auf diese Weise können die strömungsmechanischen Eigenschaften des Schaufelkranzsegments verbessert werden.

Bei dem Verfahren zur Herstellung eines Schaufelkranzsegments können zwischen dem Schritt des Fügens und der Nachbearbeitung durch materialabtragende Verfahren bzw. nach Fertigstellung der Endkontur eine oder mehrere Wärmebehandlungen durchgeführt werden, um das Gefüge des Werkstoffs so einzustellen, dass die gewünschten Eigenschaften, wie beispielsweise Festigkeitseigenschaften, erreicht werden. Da die eingesetzten Fügeverfahren gefügeschonend sind, also nur einen geringen Einfluss auf die Gefügeausbildung in der Fügezone und/oder eine begrenzte Fügezone aufweisen, können einzelne oder mehrere Wärmebehandlungsschritte sowohl vor dem Fügeprozess, als auch nach dem Fügeprozess und vor der Nachbearbeitung zur Herstellung der Endkontur oder gar nach der Fertigstellung der Endkontur durchgeführt werden. Vorteilhaft ist insbesondere, wenn viele Verfahrensschritte für die bereits gefügten Rohlinge gemeinsam durchgeführt werden können, sodass eine separate Handhabung der Rohlinge nicht erforderlich ist, was die Prozesskosten senkt.

Das Fügen kann durch Laserstrahlschweißen, Elektronenstrahlschweißen, Hochtemperaturlöten oder Reibschweißen, insbesondere Orbital-Reibschweißen oder Multiorbital-Reibschweißen sowie lineares Reibschweißen erfolgen. Diese Verfahren beeinträchtigen einen durch einen schmiedetechnischen Herstellungsprozess der Rohlinge eingestellten Gefügezustand der Rohlinge nur in einem geringen Maße, sodass sie für das vorliegende Verfahren besonders geeignet sind.

Beim Laser- oder Elektronenstrahlschweißen können die Rohlinge über die Spröd - Duktil - Übergangstemperatur des TiAl-Werkstoffs vorgewärmt werden, um Rissbildung zu vermeiden.

Das Löten kann bei einer nur lokalen Erwärmung der zu fügenden Rohlinge im Bereich der Fügefläche durchgeführt werden, wobei insbesondere eine induktive Erwärmung lokaler Bereiche vorgesehen werden kann.

Für das Löten können insbesondere Lote auf Titan- oder Nickelbasis Verwendung finden. Die Lote umfassen beispielsweise Ti - Basis - Lote, Ti60CuNi, Ti70CuNi, Ni - Basis - Lote, AMS47XX, AMS4775, AMS 4776, AMS 4777, AMS 4778, AMS 4779 und AMS 4782.

Unter Ti - Basis - Lot wird hierbei ein Lot verstanden, welches, wie beispielsweise Ti60CuNi oder Ti70CuNi, einen überwiegenden Anteil an Titan aufweist oder Titan den größten Bestandteil darstellt. Bei Ti60CuNi oder Ti70CuNi liegt der Anteil des Titan bei 60 bzw. 70 Gew.%.

Darüber hinaus können Ni - Basis - Lote eingesetzt werden, bei denen wiederum Nickel den überwiegenden Anteil oder den größten Bestandteil darstellt. Bekannte Nickellote werden mit den Bezeichnungen AMS47XX, wobei XX als Platzhalter für Ziffern zwischen 1 und 9 steht, vertrieben. Besondere Beispiele, die gut für die vorliegende Erfindung geeignet sind, sind AMS 4775 mit 14 Gew.% Chrom, 4,5 Gew.% Eisen, 4,5 Gew.% Silizium, 3,1 Gew.% Bor und 0,7 Gew.% Kohlenstoff und dem Rest Nickel sowie AMS 4776 mit 14 Gew.% Chrom, 4,5 Gew.% Eisen, 4,5 Gew.% Silizium, 3,1 Gew.% Bor und dem Rest Nickel, AMS 4777 mit 7 Gew.% Chrom, 3 Gew.% Eisen, 4,1 Gew.% Silizium, 3 Gew.% Bor und dem Rest Nickel, AMS 4778 mit 4,5 Gew.% Silizium, 2,9 Gew.% Bor und dem Rest Nickel, AMS 4779 mit 3,5 Gew.% Silizium, 1,9 Gew.% Bor und dem Rest Nickel sowie AMS 4782 mit 19 Gew.% Chrom, 10 Gew.% Silizium und dem Rest Nickel.

Wie bereits oben erwähnt können die Rohlinge bereits in einer sehr frühen Stufe des Herstellungsverfahrens bzw. mit einer sehr weit von der Endkontur entfernten Form gefügt werden, und zwar beispielsweise in Form von Quadern.

Ferner können die Rohlinge vorzugsweise in einer einfach herzustellenden Grundform wie beispielsweise als Quader, Zylinder oder dergleichen ausgebildet werden, aber zusätzlich im Bereich der vorgesehenen Fügezonen angepasste Bereiche, wie z.B. hervorstehende Bereiche aufweisen, sodass lediglich die erforderlichen Verbindungsbereiche gefügt werden müssen, während andere Bereiche, die anschließend bei der Formgebung durch Materialabtrag sowieso wieder entfernt werden, nicht gefügt werden müssen. Dies ist insbesondere für das Reibschweißen vorteilhaft, da dadurch die erforderlichen Anpresskräfte beim Verbinden niedrig gehalten werden können.

Unter TiAl-Werkstoffen sind bei der vorliegenden Erfindung alle Werkstoffe gemeint, die auf TiAl-Basis hergestellt sind, also als Bestandteile mit dem größten Anteil Titan und Aluminium umfassen. Insbesondere sind hierunter Werkstoffe zu verstehen, die intermetallische Phasen im Gefüge aufweisen, wie α₂-Ti₃Al oder γ-TiAl. Darüber hinaus können die TiAl-Werkstoffe verschiedenste Legierungselemente aufweisen, wie beispielsweise Niob oder Molybdän.

### KURZBESCHREIBUNG DER FIGUREN

Die beigefügten Zeichnungen zeigen in rein schematischer Weise in
Fig. 1 eine Darstellung von zwei Rohlingen zum bzw. beim Fügen;
Fig. 2 eine Darstellung von zwei weiteren Rohlingen zum bzw. beim Fügen; und in
Fig. 3 ein fertiges Schaufelkranzsegment, welches gemäß der vorliegenden Erfindung hergestellt worden ist.

### AUSFÜHRUNGSBEISPIELE

Weitere Vorteile, Kennzeichen und Merkmale der vorliegenden Erfindung werden bei der nachfolgenden detaillierten Beschreibung von Ausführungsbeispielen anhand der beigefügten Zeichnungen deutlich. Die Erfindung ist jedoch nicht auf diese Ausführungsbeispiele beschränkt.

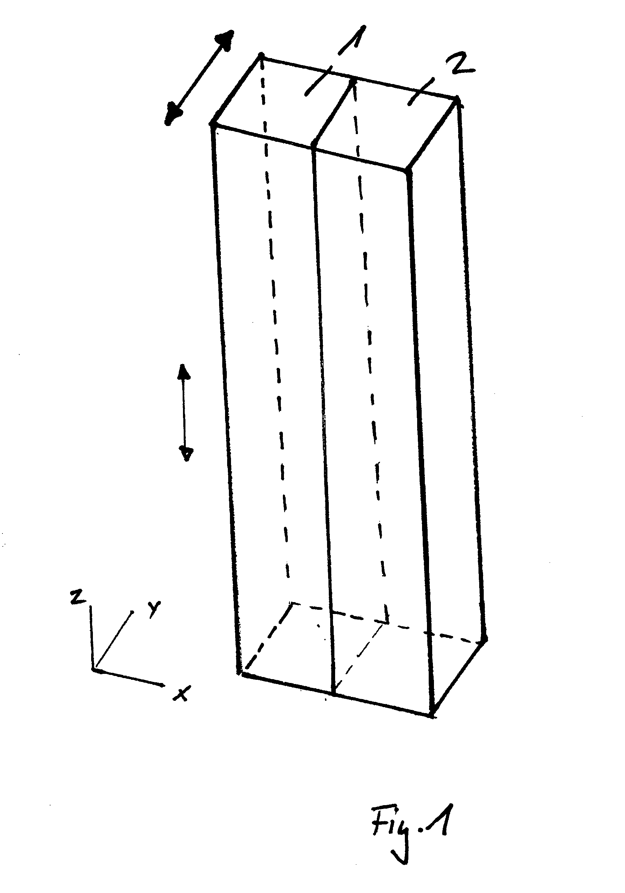

Die Figur 1 zeigt in einer perspektivischen Darstellung zwei Rohlinge 1 und 2 aus einem TiAl-Werkstoff, die als Quader ausgebildet sind. Die Rohlinge 1 und 2 werden entlang der benachbarten Seitenflächen, die sich in z- und γ-Richtung erstrecken, miteinander stoffflüssig verbunden. Das stoffflüssige Verbinden kann beispielsweise durch lineares Reibschweißen bzw. Orbital-Reibschweißen oder Multiorbital-Reibschweißen erfolgen. Die Flächenpressungen können beim Linear- bzw. Orbital-Reibschweißen im Bereich zwischen 20 und 200 MPa, vorzugsweise im Bereich zwischen 40 und 100 MPa liegen. Die Bewegungsamplitude beim linearen Reibschweißen kann im Bereich von 1 Millimeter bis 8 Millimeter, vorzugsweise 2 Millimeter bis 4 Millimeter, liegen, wobei für die oszillierende Bewegung eine Frequenz von 15 1/s bis 150 l/s, vorzugsweise 30 1/s bis 100 1/s, eingestellt werden kann. Die möglichen relativen Bewegungen der Rohlinge beim Reibschweißen sind durch die Doppelpfeile angezeigt.

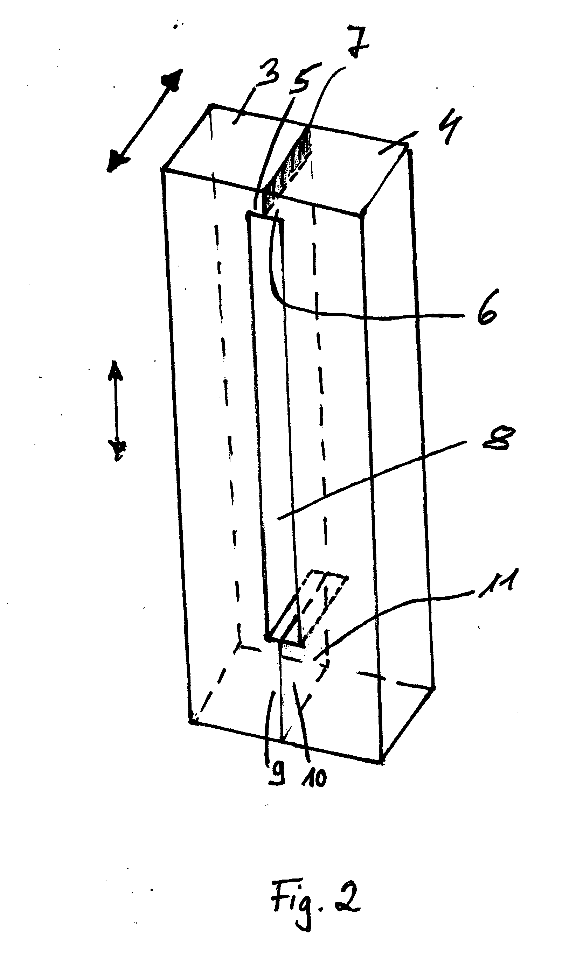

Die Figur 2 zeigt ein zweites Ausführungsbeispiel, bei dem zwei gegenüber dem Ausführungsbeispiel der Figur 1 unterschiedlich geformte Rohlinge 3,4 miteinander gefügt werden. Die Rohlinge 3,4 weisen wiederum einen im Wesentlichen quaderförmigen Grundkörper auf, der jedoch an den Enden jeweils seitliche Vorsprünge 5,6, bzw. 9,10 aufweist, sodass die Rohlinge 3,4 eine C-Form aufweisen. Die Rohlinge 3,4 werden mit den Vorsprüngen 5,6 bzw. 9,10 gegeneinander angeordnet und an den entstehenden Anlageflächen gefügt, sodass die Verbindungsbereiche auch als Fügezonen 7,11 bezeichnet werden können.

Zwischen den Rohlingen 3,4 ist in einem mittleren Bereich ein Spalt 8 ausgebildet, der bei dem fertig gestellten Schaufelkranzsegment bereits einem Durchlass zwischen zwei benachbarten Schaufelblättern entspricht.

Ähnlich der Ausführungsform der Figur 1 können die Rohlinge 3,4 vorzugsweise durch Reibschweißen, insbesondere lineares Reibschweißen, miteinander verbunden werden, wobei wiederum die oszillierende Reibbewegung für das Reibschweißen durch die Doppelpfeile angezeigt ist.

Durch den Spalt 8, der zwischen den zu verschweißenden Rohlingen 3,4 angeordnet ist, wird der Kraftaufwand, der für die Verbindung beim Reibschweißen erforderlich ist, nämlich die sogenannte Stauchkraft, deutlich reduziert. Darüber hinaus kann auch der Materialabtrag und der entsprechende Aufwand hierfür reduziert werden, da durch den Spalt 8 weniger Material abgetragen werden muss.

Das Reibschweißen weist weiterhin den Vorteil auf, dass in der Fügezone keine Poren und Risse entstehen, da die zu fügenden Bauteile unter Druck aneinander gepresst werden.

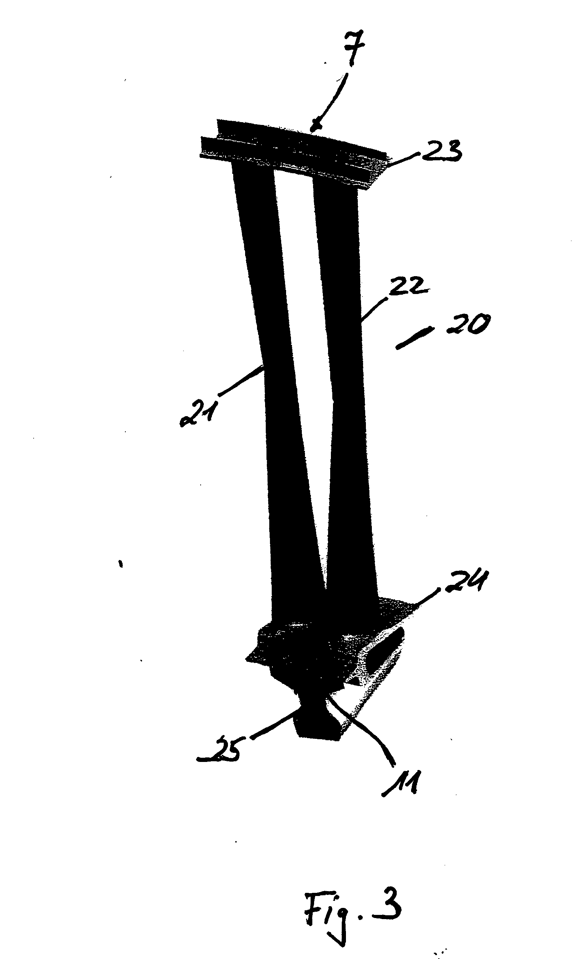

Die Figur 3 zeigt ein entsprechend ausgebildetes Schaufelkranzsegment 20 mit zwei Schaufelblättern 21 und 22, die über ein außenliegendes Deckband 23 und ein innen liegendes Deckband 24 miteinander verbunden sind. Das Schaufelkranzsegment 20 weist weiterhin einen gemeinsamen Schaufelfuß 25 auf, der zur Anordnung des Schaufelkranzsegments in einer Scheibe der Gasturbine dient. Statt für jedes Schaufelblatt bzw. jede Schaufel einen Schaufelfuß vorsehen zu müssen, ist bei dem erfindungsgemäßen Schaufelkranzsegment 20 lediglich ein einziger Schaufelfuß vorgesehen, mit dem das Schaufelkranzsegment in der Scheibe angeordnet ist. Erfindungsgemäß verläuft die Fügezone durch die Mitte bzw. einen mittleren Bereich des Fußes, so dass durch die starke Ausbildung des Fußes die Materialbelastung sehr niedrig ist, so dass Beeinträchtigungen des Gefüges durch das Fügen keine Auswirkungen haben.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise vorgenommen werden können, dass einzelne Merkmale weggelassen, oder andersartige Kombinationen von Merkmalen verwirklicht werden, ohne dass der Schutzbereich der beigefügten Ansprüche verlassen wird.

## Patentansprüche

1. Verfahren zur Herstellung eines Schaufelkranzsegments für eine Gasturbine, insbesondere für ein Flugtriebwerk, mit mindestens zwei benachbarten Schaufelblättern (21, 22), die einen einzigen gemeinsamen Schaufelfuß (25) aufweisen, wobei das Verfahren folgende Verfahrensschritte umfasst:
- Schmieden von mindestens zwei Rohlingen (1,2;3,4),
- Fügen der Rohlinge zu einem Schaufelkranzsegment mittels eines Verfahrens zum stoffschlüssigen Verbinden und
- Nachbearbeitung des Rohlingverbundes durch materialabtragende Verfahren
**dadurch gekennzeichnet,**
**dass** die mindestens zwei Rohlinge (1,2;3,4) aus einem TiAl-Werkstoff geschmiedet werden, und dass beim Fügen der Rohlinge eine Fügezone (11) entsteht, die durch die Mitte bzw. einen mittleren Bereich des gemeinsamen Schaufelfußes (25) verläuft.

2. Verfahren nach Anspruch 1,
**dadurch gekennzeichnet, dass**
zwischen dem Schritt des Fügens und der Nachbearbeitung durch materialabtragende Verfahren oder nach der Nachbearbeitung durch materialabtragende Verfahren eine oder mehrere Wärmebehandlungen durchgeführt werden.

3. Verfahren nach Anspruch 1 oder 2,
**dadurch gekennzeichnet, dass**
das Fügen durch Laserstrahlschweißen, Elektronenstrahlschweißen, Hochtemperaturlöten oder Reibschweißen, insbesondere lineares Reibscheißen, Orbitalreibschweißen oder Multi-Orbitalreibschweißen erfolgt.

4. Verfahren nach einem der vorhergehenden Ansprüche,
**dadurch gekennzeichnet, dass**
der TiAl - Werkstoff während des Laserstrahl- oder Elektronenstrahlschweißens über die Spröd - Duktil - Übergangstemperatur des TiAl - Werkstoffs vorgewärmt wird.

5. Verfahren nach Anspruch 3,
**dadurch gekennzeichnet, dass**
das Löten mittels einer lokalen Erwärmung, insbesondere durch induktive Erwärmung, durchgeführt wird.

6. Verfahren nach einem der Ansprüche 3 oder 5,
**dadurch gekennzeichnet, dass**
für das Löten insbesondere Ti - oder Ni - Basis - Lote verwendet werden.

7. Verfahren nach einem der vorhergehenden Ansprüche,
**dadurch gekennzeichnet, dass**
die Rohlinge als Quader, als Quader mit hervorstehenden Fügezonen oder als endkonturnahe Bauteile ausgebildet sind.

8. Schaufelkranzsegment für eine Gasturbine, insbesondere für ein Flugtriebwerk, aus einem TiAl-Werkstoff mit mindestens zwei benachbarten Schaufelblättern, hergestellt gemäß dem Verfahren nach einem der vorhergehenden Ansprüche,
wobei mindestens zwei benachbarte Schaufelblätter einen einzigen gemeinsamen Schaufelfuß aufweisen, und wobei eine Fügezone (11) durch die Mitte bzw. einen mittleren Bereich des gemeinsamen Schaufelfußes (25) verläuft.

## Claims

1. A method for producing a blade-ring segment for a gas turbine, in particular for an aircraft engine, having at least two adjacent blades (21, 22) that have a single common blade root (25), wherein the method includes the following method steps:
- forging of at least two blanks (1,2;3,4),
- joining of the blanks to form a blade-ring segment by means of a method for substance-closing connection, and
- re-processing of the blank composite by means of material-removing methods,
**characterised in that**
the at least two blanks (1,2;3,4) are forged from a TiAl-material,
and during the joining of the blanks a joining zone (11) develops that extends through the centre or a central region of the common blade root (25).

2. A method according to claim 1,
**characterised in that**
one or more heat-treatments are carried out between the step of joining and re-processing by means of material-removing methods or after the re-processing by means of material-removing methods.

3. A method according to claim 1 or 2,
**characterized in that**
the joining is effected by laser-beam welding, electron-beam welding, high-temperature soldering or friction-welding, in particular linear friction-welding, orbital friction-welding or multi-orbital friction-welding.

4. A method according to one of the preceding claims,
**characterised in that**
the TiAl-material is pre-heated during the laser-beam or electron-beam wielding above the brittle-to-ductile transition temperature of the TiAl-material.

5. A method according to claim 3,
**characterised in that**
the soldering is carried out by means of local heating, in particular by means of inductive heating.

6. A method according to one of claims 3 or 5,
**characterised in that**
in particular Ti- or Ni-based solders are used for the soldering.

7. A method according to one of the preceding claims,
**characterised in that**
the blanks are formed as cuboids, as cuboids with protruding joining zones or as components with close to final contours.

8. A blade-ring segment for a gas turbine, in particular for an aircraft engine, consisting of a TiAl-material having at least two adjacent blades, prcduced in accordance with the method according to one of the preceding claims,
wherein at least two adjacent blades have a single common blade root, and wherein a joining zone (11) extends through the centre or a central region of the common blade root (25).

## Revendications

1. Procédé de fabrication d'un segment de couronne à aubes pour une turbine à gaz, en particulier pour un réacteur d'avion, avec au moins deux aubes contiguës (21, 22) présentant un seul pied d'aube (25) commun, ledit procédé comprenant les étapes suivantes :
- forgeage d'au moins deux ébauches (1, 2 ; 3, 4),
- assemblage des ébauches pour former un segment de couronne à aubes au moyen d'un procédé à liaison de matière, et
- finition de l'ensemble d'ébauches au moyen d'un procédé à enlèvement de matière,
**caractérisé en ce que**
les au moins deux ébauches (1, 2 ; 3, 4) sont forgées dans un alliage TiAl, et **en ce qu'**une zone de joint (11) est formée à l'assemblage des ébauches, laquelle s'étend par le milieu ou par une zone centrale du pied d'aube (25) commun.

2. Procédé selon la revendication 1,
**caractérisé en ce que**
un ou plusieurs traitements thermiques sont effectués entre l'étape d'assemblage et celle de finition par procédé à enlèvement de matière, ou après la finition par procédé à enlèvement de matière.

3. Procédé selon la revendication 1 ou 2,
**caractérisé en ce que**
l'assemblage est réalisé par soudage par faisceau laser, soudage par faisceau d'électrons, brasage à haute température ou soudage par friction, en particulier soudage par friction linéaire, soudage par friction orbital ou soudage par friction multi-orbital.

4. Procédé selon l'une des revendications précédentes,
**caractérisé en ce que**
l'alliage TiAl est préchauffé à une température supérieure à la température de transition fragile - ductile de l'alliage TiAl pendant le soudage par faisceau laser ou par faisceau d'électrons.

5. Procédé selon la revendication 3,
**caractérisé en ce que**
le brasage est effectué au moyen d'un chauffage local, en particulier un chauffage par induction.

6. Procédé selon l'une des revendications 3 ou 5,
**caractérisé en ce que**
des métaux d'apport en particulier à base Ti ou Ni sont utilisés pour le brasage.

7. Procédé selon l'une des revendications précédentes,
**caractérisé en ce que**
les ébauches sont prévues comme parallélépipèdes, comme parallélépipèdes à zones de joint saillantes ou comme pièces à contour proche du contour final.

8. Segment de couronne à aubes pour une turbine à gaz, en particulier pour un réacteur d'avion, en alliage TiAl avec au moins deux aubes contiguës, fabriqué suivant le procédé selon l'une des revendications précédentes,
où au moins deux aubes contiguës présentant un seul pied d'aube commun, et où une zone de joint (11) est formée s'étend par le milieu ou par une zone centrale du pied d'aube (25) commun.
